# EUROPÄISCHE PATENTSCHRIFT

(11) **EP 3 154 806 B1**
(45) Veröffentlichungstag und Bekanntmachung des Hinweises auf die Patenterteilung: **25.04.2018**
(21) Anmeldenummer: 15736777.2
(22) Anmeldetag: 10.06.2015
(51) Int. Cl.: B60K 6/40, B60K 6/387

(54) **ALS EINSCHUBMODUL AUSGEBILDETES HYBRIDMODUL**
HYBRID MODULE DESIGNED AS AN INSERTABLE MODULE
MODULE HYBRIDE RÉALISÉ SOUS FORME DE MODULE INSÉRABLE

(30) Priorität: 13.06.2014 DE 102014211297
(43) Veröffentlichungstag der Anmeldung: 19.04.2017
(73) Patentinhaber: Schaeffler Technologies AG & Co. KG, 91074 Herzogenaurach (DE)
(72) Erfinder: ZIEFLE, Florian, 72250 Freudenstadt (DE); MACKOWIAK, Stefan, 76316 Malsch (DE); VOGEL, Felix, 76547 Sinzheim (DE)
(86) Internationale Anmeldenummer: PCT/DE2015/200354
(87) Internationale Veröffentlichungsnummer: WO 2015/188826

(56) Entgegenhaltungen:
- EP-A1- 1 736 345
- DE-A1-102005 011 888
- DE-A1-102008 040 493
- DE-A1-102011 078 125
- US-A1- 2008 093 135
- US-A1- 2010 270 874
- US-A1- 2011 039 649

## Beschreibung

Die Erfindung betrifft ein Hybridmodul für hybrid angetriebene Maschinen, insbesondere für Fahrzeuge mit Hybridantrieb, die eine Kombination aus Elektro- und Verbrennungsmotor aufweisen.

In den nicht vorveröffentlichten WO 2015/078462 A1 und WO 2015/078464 A1 sind solche Hybridmodule gezeigt, wobei diese ein eigenes Gehäuse aufweisen und wobei an ein Bauteil des Hybridmoduls ein Leistungsmodul befestigt ist.

Ein solches Hybridmodul wird über ein eigenes Gehäuse zwischen dem Verbrennungsmotor und dem Getriebe gelagert. Somit können alle Anschlüsse an der Außenseite des Gehäuses des Hybridmoduls angebracht werden. Des Weiteren wird zur Ansteuerung des Kupplungsaktors ein Steuergerät an die Außenseite des Gehäuses angebracht und mit jeweils einem Stecker vom Kabelbaum des Fahrzeugs und vom Kupplungsaktor kontaktiert. Bei der Endmontage, die üblicher an einem anderen Produktionsort erfolgt, müssen nach Integration des Hybridmoduls lediglich die Steckverbindungen geschlossen werden.

Aus der DE 10 2011 078 125 A1 ist ein Hybridmodul bekannt, bei dem ein Positionsdetektor radial außen am Hybridmodul montiert ist. Dieser Positionsdetektor wirkt mit einem mit dem Ausrücker der Kupplung des Hybridmoduls verbundenen Positionsgeber zusammen. Ist das Hybridmodul in dem Getriebegehäuse eingebaut, so stellt sich eine Kontaktierung der Aktorelektronik somit als sehr komplex dar, da kein einfacher Zugriff hierauf möglich ist.

Aus der EP 1 736 345 A1 sind ein Hybridmodul gemäß dem Oberbegriff des Anspruchs 1 und ein Verfahren gemäß dem Oberbegriff des Anspruchs 10 bekannt.

Die Erfinder haben sich die Aufgabe gestellt, den vorliegenden Stand der Technik weiterzuentwickeln. Insbesondere soll ein Hybridmodul bereitgestellt werden, das bauraumsparend und/oder durch alternative Montageschritte effizient in ein Fahrzeug eingebaut werden kann.

Diese Aufgabe wird mit den in den unabhängigen Ansprüchen angegebenen Maßnahmen gelöst.

Weitere vorteilhafte Ausgestaltungen der vorliegenden Erfindung sind Gegenstand der abhängigen Ansprüche.

Die Aufgabe wird insbesondere gelöst durch ein Hybridmodul mit einer Kupplung mit Kupplungsaktor und einer elektrischen Maschine, einer Verbrennungsmotorseite und einer Getriebeseite, wobei das Hybridmodul als vormontiertes Einschubmodul zum Einschub in ein Getriebegehäuse ausgebildet ist und ein Aktorelektronikmodul bereits an das Hybridmodul vormontiert ist. Das Aktorelektronikmodul ist hierbei mittels einer Halterung an dem Hybridmodul vormontiert, so dass es radial vom Hybridmodul mit einem Abstand beabstandet ist, der so dimensioniert ist, dass im eingebauten Zustand das Hybridmodul innerhalb und das Aktorelektronikmodul außerhalb des Getriebegehäuses angeordnet ist.

Insbesondere kann beim Getriebegehäuse zwischen einem Trocken- und einem Nassraum unterschieden werden. Im Nassraum ist das Getriebe als solches angeordnet, während der Trockenraum oder auch Kupplungsglocke zur Aufnahme einer Kupplung oder gerade zur Aufnahme eines Hybridmoduls mit Kupplung dient. Im vorliegenden Fall ist das Hybridmodul bevorzugt im Trockenraum des Getriebegehäuses eingebaut.

In einer Ausführungsform der Erfindung ist es vorgesehen, dass das Hybridmodul, das Getriebegehäuse und das Aktorelektronikmodul wenigstens bereichsweise radial und axial verschachtelt sind. Das bedeutet, dass beispielsweise Bereiche des Getriebegehäuses radial zwischen dem Hybridmodul und dem Aktorelektronikmodul liegen.

Die Aufgabe wird weiterhin gelöst durch ein Verfahren zur Montage eines Hybridmoduls wobei folgender Schritt durchgeführt wird:
- Vormontieren des Hybridmoduls als Einschubmodul, wobei ein Aktorelektronikmodul an das Hybridmodul vormontiert wird.

Hierdurch ist es möglich, ein Getriebegehäuse als Gehäuse zu verwenden, welches bevorzugt einen entsprechend dimensionierten Gehäusefortsatz zur Aufnahme des Einschubmoduls aufweist. Gleichzeitig ist es durch die Vormontage des Aktorelektronikmoduls an das Hybridmodul möglich, feste Verkabelungen oder Steckverbindungen vorzusehen, so dass keine losen Kabelschwänze geschützt werden müssen, da sie nicht vorhanden sind. Ferner entfällt ein separater Transport des Aktorelektronikmoduls zum Montageort sowie eine anschließende Zuordnung zum richtigen Hybridmodul nach dem Transport (z.B. wenn ein Aktorelektronikmodul an ein bestimmtes Hybridmodul kalibriert wird und/oder ein Funktionstest vor dem Ausliefern an den Endmontageort durchgeführt wird). Der Montageaufwand nach dem Transport zum Montageort ist reduziert, da dort dann eine Befestigung und Verkabelung des Aktorelektronikmoduls entfällt. Der Demontageaufwand nach der Kalibrierung oder nach dem Test von Aktorelektronikmodul und Hybridmodul vor dem Transport entfällt, da das Aktorelektronikmodul am Hybridmodul belassen werden kann.

Im Folgenden bezieht sich die Verwendung von radial und axial auf die Rotorachse des Hybridmoduls.

Die elektrische Maschine weist bevorzugt einen Rotor auf, in welchem die Kupplung integriert ist.

Als Einschubmodul ausgebildet ist das Hybridmodulbevorzugt, indem es bevorzugt gehäuselos ist, d.h. ohne ein das Hybridmodul umgebendes Gehäuse ausgebildet. Es ist somit bevorzugt kein eigenes Gehäuse für das Hybridmodul vorgesehen. Bei der Endmontage, die an einem anderen Produktionsstandort erfolgt, wird das Modul in das dort dann vorhandene Getriebegehäuse eingeschoben (Einschubmodul).

Das Aktorelektronikmodul weist bevorzugt die für den Betrieb des Kupplungsaktors notwendige Elektronik oder einen Teil dieser Elektronik auf. Es ist z.B. ein Aktorsteuergerät. Es ist bevorzugt an einem feststehenden Teil des gehäuselosen Hybridmoduls montiert.

Nach dem Vormontieren des Hybridmoduls als Einschubmodul und Vormontieren des Aktorelektronikmoduls an das Hybridmodulerfolgt bevorzugt eine (elektronische) Kalibrierung des Aktorelektronikmoduls an dieses Hybridmodul.

Bevorzugt erfolgt nach dem Vormontieren ein Einschieben und Befestigen des Hybridmoduls in ein Getriebegehäuse, insbesondere in einen Trockenraum des Getriebes bzw. in die Kupplungsglocke und weiterhin bevorzugt ein Anschließen mindestens eines Sensorik- und/oder Aktorikkabels an das Aktorelektronikmodul. Dieses kann besonders einfach erfolgen, wenn es vorgesehen, dass das Aktorikmodul, das Hybridmodul und das Getriebegehäuse wenigstens bereichsweise axial und radial verschachtelt angeordnet sind. Das Aktorikmodul kann dann weiter Steckverbindungen aufweisen, die mit entsprechenden komplementären Steckverbindungen des Kabelbaums des Antriebsstranges verbunden werden könnne. Da sich das Aktorikmodul außerhalb des Getriebegehäuses befindet ist die Zusammenführung und Kontaktierung der entsprechenden Steckerteile einfach durchzuführen.

Bei einem weiteren erfindungsgemäßen Verfahren wird vor oder nach dem Vormontieren eine, bevorzugt elektronische, Kalibrierung und/oder ein, bevorzugt elektronischer, Funktionstest des Aktorelektronikmoduls zusammen mit dem Hybridmodul durchgeführt.

Hierdurch ist eine Anpassung oder ein Test des dann fertigen Einschubmoduls durch den Vormonteur möglich. Hierdurch wird die Qualität und Funktionstüchtigkeit des Hybridmoduls wesentlich verbessert. Dabei ist aufgrund der Vormontage von Aktorelektronikmodul und Hybridmodul eine feste Zuordnung des abgestimmten/getesteten Aktorelektronikmoduls zum Hybridmodul gegeben und somit ist keine erneute Zuordnung beim Endmonteur notwendig. Verwechslungen werden so ausgeschlossen. Z.B. wird das Aktorelektronikmodul lediglich über die notwendigen Kabel für einen Funktionstest oder eine Kalibrierung vor der Vormontage mit dem Hybridmodul verbunden. Das Aktorelektronikmodul kann dabei z.B. auf einem Prüfstand angeordnet sein. Es erfolgt dann die Kalibrierung und/oder der Funktionstest. Danach wird das Aktorelektronikmodul an das Hybridmodul vormontiert. Alternativ kann auch erst die Vormontage des Aktorelektronikmoduls an das Hybridmoduls erfolgen, mitsamt der Verbindung der notwendigen Kabel. Es erfolgt dann die Kalibrierung und/oder der Funktionstest.

Bei einem weiteren erfindungsgemäßen Hybridmodul ist das Aktorelektronikmodul an eine verbrennungsmotorseitige, radial verlaufende Wandung, bevorzugt mittelbar, besonders bevorzugt unmittelbar befestigt. In einem weiteren erfindungsgemäßen Verfahren erfolgt die Vormontage des Aktorelektronikmoduls an eine verbrennungsmotorseitige, radial verlaufende Wandung.

Hierdurch kann eventuell vorhandener Bauraum, z.B. zwischen einem Schwingungsdämpfer und der elektrischen Maschine, genutzt werden, um das Aktorelektronikmodul zu montieren.

Die radial verlaufende Wandung ist bevorzugt ein Bauteil, welches sich zwischen einem radial äußeren Punkt zu einem radial inneren Punkt erstreckt und dessen radiale Ausdehnung größer als die axiale Ausdehnung ist. Unter einem radialen Verlauf wird auch ein wesentlich radialer Verlauf verstanden, d.h. z.B. im Extremfall, dass der Winkel zwischen Achse und dem radialen Gehäusebereich größer als 45° ist. Die radial verlaufende Wandung ist bevorzugt verbrennungsmotorseitig axial neben der elektrischen Maschine angeordnet. Hierunter wird bevorzugt verstanden, dass von der Verbrennungsmotorseite aus kommend in axialer Richtung zunächst die radial verlaufende Wandung angeordnet ist und danach die elektrische Maschine. Bevorzugt weist die radial verlaufende Wandung eine Öffnung zur Durchführung einer Welle (z.B. Rotorwelle oder Antriebswelle oder Welle zwischen Kupplung und Schwingungsdämpfer) auf. Besonders bevorzugt weist die Öffnung ein Lager auf, z.B. ein ein- oder mehrreihiges Wälzlager, welches die Welle drehbar gegenüber dem Gehäusebereich lagert. Bevorzugt weist das Hybridmodul einen Schwingungsdämpfer auf und die Wandung ist als Zwischenwand axial zwischen einerseits dem Schwingungsdämpfer und andererseits der elektrischen Maschine und/oder der Kupplung angeordnet. Bevorzugt ist die Wandung eine (bevorzugt im eingebauten Zustand des Einschubmoduls abdichtende) Trennwand zwischen der elektrische Maschine mit der Kupplung und einem Schwingungsdämpfer (bevorzugt ein Torsionsdämpfer).

Bevorzugt ist der Kupplungsaktor an der Wandung mittelbar oder bevorzugt direkt abgestützt. Z.B. ist der Kupplungsaktor ein elektronischer Zentralausrücker. Die Abstützung des Kupplungsaktors erfolgt bevorzugt über eine Trägereinrichtung, besonders bevorzugt ist die Trägereinrichtung des Kupplungsaktors integraler Bestandteil der Wandung. Z.B. sind eine Trägereinrichtung eines elektronischen Zentralausrückers und die radial verlaufende Wandung als ein Bauteil z.B. als Zwischenwand zwischen einem Schwingungsdämpfer und der elektrischen Maschine angeordnet.

Eine direkte Befestigung des Aktorelektronikmoduls an die Wandung ist z.B. eine direkte Verschraubung des Gehäuses des Aktorelektronikmoduls oder einer Platine des Aktorelektronikmoduls, eine indirekte Befestigung ist z.B. eine Befestigung über eine Halterung.

Bei einem weiteren erfindungsgemäßen Hybridmodul ist das Aktorelektronikmodul mittels einer Halterung, die mindestens einen Steg mit einem radial verlaufenden Bereich aufweist, am Hybridmodulbefestigt, wobei der Steg an seinem einen Endbereich mit dem Hybridmodulbefestigt ist und mit seinem anderen Endbereich mit dem Aktorelektronikmodul, bevorzugt mittelbar, besonders bevorzugt unmittelbar, verbunden ist. Bei einem weiteren erfindungsgemäßen Verfahren wird das Aktorelektronikmodul mittels einer entsprechenden Halterung am Hybridmodul befestigt.

Hierdurch kann das Aktorelektronikmodul über die jeweilige Ausbildung der Halterung an die in der Einbausituation (z.B. dem bestimmten Fahrzeugtyp) vorhandenen Bauräume angepasst werden. Bevorzugt ist das Aktorelektronikmodul mittels der Halterung an einer Position radial außerhalb des Umfangs des Stators oder evtl. im Stator vorhandenen Kühlkanals angeordnet, besonders bevorzugt radial außerhalb des Außendurchmesssers bzw. der Außenkontur des Getriebegehäuses, in welches das Hybridmodul eingeführt werden soll.

Die Halterung dient bevorzugt zur Befestigung des Aktorelektronikmoduls und bevorzugt Steckern an der Außenseite des Getriebegehäuses. Die Halterung hat ihren Fußpunkt bevorzugt an der radialen Wandung und/oder am Stator oder Kühlkanal der elektrischen Maschine. Das Aktorelektronikmodul wird bevorzugt mittels Schrauben an der Halterung, z.B. einer Montageplatte (z.B. ein Trägerblech) der Halterung, verschraubt. Bevorzugt sind ein oder mehrere Gewinde direkt in das Blech integriert oder sind eine oder mehrere eingepresste Stanzmuttern vorhanden. Die Halterung besteht bevorzugt aus einem Blech mit vormontiertem Aktorelektronikmodul, welches durch zwei Schrauben mit dem stehenden Teil des Hybridmoduls verschraubt ist. Bevorzugt wird die Halterung mit zwei weiteren Schrauben nach Einschub des Hybridmoduls am Getriebegehäuse fixiert. Alternativ zu Blech ist die Halterung bevorzugt als Aluminium-Druckguss-Teil ausgeführt. Besonders bevorzugt ist die Halterung einstückig mit der radial verlaufenden Wandung ausgebildet, z.B. als Gussteil.

Ein Steg ist bevorzugt ein einstückiges (Blech-)Bauteil, es ist jedoch auch denkbar, den Steg aus mehreren Einzelstücken zusammenzusetzen.

Der radial verlaufende Bereich des Stegs ist bevorzugt ein Bereich, welcher sich zwischen einem radial äußeren Punkt und einem radial inneren Punkt erstreckt und dessen radiale Ausdehnung größer als die axiale Ausdehnung ist. Unter einem radialen Verlauf wird auch ein wesentlich radialer Verlauf verstanden, d.h. z.B. im Extremfall, dass der Winkel zwischen Achse und dem radialen Gehäusebereich größer als 45° ist. Der radial verlaufende Bereich des Stegs ist bevorzugt die Grenze zwischen dem einen Endbereich des Stegs, über den der Steg mit dem Hybridmodul verbunden wird oder ist, und dem anderen Endbereich des Stegs, über den der Steg mit dem Aktorelektronikmodul verbunden ist oder wird. Bevorzugt weist das Getriebegehäuse entsprechend den Positionen des oder der Stege Aussparungen an der Öffnungskante des Getriebegehäuses auf. Die Öffnungskante definiert bevorzugt diejenige Öffnung, in welche das Hybridmodul eingeschoben wird.

Besonders bevorzugt weist die Halterung zwei oder mehr derartige Stege auf. Die für den Fall eines Stegs in dieser Beschreibung genannten Eigenschaften eines Stegs gelten bevorzugt auch für den zweiten Steg oder die weiteren Stege.

Der Steg ist an dem einen Endbereich mit dem Hybridmodul z.B. mittels einer Verschraubung befestigt. Hierfür weist der eine Endbereich z.B. eine Befestigungsmöglichkeit, z.B. in Form einer Bohrung auf. Bevorzugt ist der Steg im Bereich der Bohrung abgewinkelt. Bevorzugt ist der Steg an dem einen Endbereich mit der radial verlaufenden Wandung direkt verbunden. Der eine Endbereich ist bevorzugt der radial innere Endbereich des Stegs.

Der Steg ist an seinem anderen Endbereich mit dem Aktorelektronikmodul z.B. über eine Montageplatte befestigt, z.B. verschraubt, in welche der Steg an seinem anderen Endbereich übergeht. Bevorzugt ist der andere Endbereich der radial äußere Endbereich des Stegs.

Bei einem weiteren erfindungsgemäßen Hybridmodul weist der andere Endbereich oder ein an diesen anschließender Bereich der Halterung oder das Aktorelektronikmodul eine Befestigungsmöglichkeit, bevorzugt mehrere Befestigungsmöglichkeiten, zur Befestigung an das Getriebegehäuse auf. Bei einem weiteren erfindungsgemäßen Verfahren wird nach dem Einführen des Hybridmoduls in das Getriebegehäuse der andere Endbereich oder ein an diesen anschließender Bereich der Halterung oder das Aktorelektronikmodul an das Getriebegehäuse, bevorzugt direkt, befestigt.

Hierdurch kann das ansonsten frei hängende Ende der Halterung mit montiertem Aktorelektronikmodul nach dem Montieren des Einschubmoduls in das Getriebegehäuse am Getriebegehäuse fixiert werden. Eine Befestigungsmöglichkeit ist z.B. eine Bohrung, ein Gewinde ein (abgewinkelter) Steg mit Bohrung.

Bei einem weiteren erfindungsgemäßen Hybridmodul weist der Steg an dem einen Endbereich einen axial verlaufenden Bereich auf, welcher in den radial verlaufenden Bereich übergeht.

Hierdurch kann ein axial verlaufender Bereich überwunden werden, der zwischen dem Montagepunkt der Halterung am Hybridmodul und der Öffnungskante des Getriebegehäuses im eingebauten Zustand des Hybridmoduls besteht. Der Steg geht von dem axialen in den radialen Bereich bevorzugt über eine Abwinkelung des Stegs über.

Der axial verlaufende Bereich ist bevorzugt ein Bereich, welcher sich zwischen zwei axial voneinander beabstandeten Punkten erstreckt und dessen radiale Ausdehnung kleiner als die axiale Ausdehnung ist. Unter einem axialen Verlauf wird auch ein wesentlich axialer Verlauf verstanden, d.h. z.B. im Extremfall, dass der Winkel zwischen Achse und dem radialen Gehäusebereich kleiner als 45° ist.

Bei einem weiteren erfindungsgemäßen Hybridmodul weist die Halterung radial außerhalb des Außenumfangs des Hybridmodulseinen axial verlaufenden Bereich auf, in welchen der radial verlaufende Bereich übergeht.

Hierdurch ist eine axiale Positionierung des Aktorelektronikmoduls an die Bauraumgegebenheiten außerhalb des Getriebegehäuses anpassbar. Der axial verlaufende Bereich ist wiederum bevorzugt ein Bereich, welcher sich zwischen zwei axial voneinander beabstandeten Punkten erstreckt und dessen radiale Ausdehnung kleiner als die axiale Ausdehnung ist. Unter einem axialen Verlauf wird auch ein wesentlich axialer Verlauf verstanden, d.h. z.B. im Extremfall, dass der Winkel zwischen Achse und dem radialen Gehäusebereich kleiner als 45° ist.

Bevorzugt weist die Halterung außerhalb des Außenumfangs des Getriebegehäuses den axial verlaufenden Bereich auf. Der axial verlaufende Bereich kann z.B. durch den Steg gebildet sein, welcher von seinem radial verlaufenden Bereich z.B. über eine Abwinkelung in den axial verlaufenden Bereich übergeht, oder durch eine Montageplatte (z.B. ein Trägerblech), welche an den Steg (oder die Stege) anschließt oder durch einen Bereich eines Aktorelektronikmodulgehäuses, das dann als Teil der Halterung angesehen werden kann.

Bevorzugt ist der axial verlaufende Bereich außerhalb des Außenumfangs des Hybridmoduls axial auf in etwa derselben axialen Höhe wie der axial verlaufende Bereich an dem einen Endbereich des Stegs angeordnet, welcher am Hybridmodul befestigt ist. Bevorzugt ist die Halterung insgesamt in etwa U-förmig, z.B. mittels eines entsprechend doppelt abgewinkelten Stegs.

Bei einem weiteren erfindungsgemäßen Hybridmodul weist der Steg ein Grommet auf, das bevorzugt im radial verlaufenden Bereich des Stegs angeordnet ist. Bei einem weiteren erfindungsgemäßen Verfahren wird ein Grommet entsprechend angeordnet.

Hierdurch ist eine bei der Endmontage ohne wesentlichen Zusatzaufwand sich einstellende, vorinstallierte Abdichtung der Halterungsdurchführung an der Getriebeöffnungskante erreichbar. Bevorzugt ist der Steg von dem Grommet umschlossen. Das Grommet hat dabei eine Dichtungsfunktion, um den Innenraum des Hybridmoduls vor Schmutz zu schützen. Bevorzugt sind Kabel durch Bohrungen im Grommet geführt und so gegen mechanische Einflüsse (z.B. Aufscheuern) geschützt. Die Grommets haben somit zusätzlich die Aufgabe, die Kabel vom Hybridmodul zum äußeren Teil des Terminals zu führen und vor mechanischen Einflüssen zu schützen. Bevorzugt weist jeder Steg ein Grommet auf. Ein Grommetist bevorzugt mittels eines Hinterschnitts oder einer Warze an den Steg befestigt.

Bei einem weiteren erfindungsgemäßen Hybridmodul ist mindestens ein Kabelentlang des Stegs von dem Hybridmodul zu dem Aktorelektronikmodul verlegt. Bei einem weiteren erfindungsgemäßen Verfahren wird mindestens ein Kabel entsprechend verlegt.

Hierdurch entfällt Verkabelungsaufwand bei der Endmontage. Die Verlegung entlang des Stegs hat außerdem den Vorteil, dass die Kabel während des Transports geschützt sind und dann bei der Montage des Einschubmoduls in das Getriebegehäuse automatisch mit dem Steg aus dem Getriebegehäuse herausgeführt und mit dem Aktorelektronikmodul auch bereits verbunden sind. Bevorzugt ist das Kabel entlang desjenigen axial verlaufenden Bereichs des Stegs, der an dem einen Endbereich vorhanden ist (dort wo der Steg mit dem Hybridmodul verbunden ist), radial außerhalb des Stegs verlegt. Hierdurch ist das Kabel vor dem sich drehenden Schwingungsdämpfer durch den Steg geschützt. Bevorzugt ist das Kabel entlang des äußeren axialen Bereichs der Halterung radial innerhalb der Halterung verlegt, wodurch das Kabel vor Beschädigung durch evtl. eng neben dem Getriebegehäuse angeordneten anderen Fahrzeugteilen geschützt ist.

Bevorzugt sind mehrere Kabel derartig verlegt.

Bei einem weiteren erfindungsgemäßen Hybridmodul ist mindestens eine Steckeinrichtungskomponente an dem anderen Endbereich oder an einem an diesen anschließenden Bereich der Halterung oder an das Aktorelektronikmodul, bevorzugt mittelbar, besonders bevorzugt unmittelbar, befestigt. Bei einem weiteren erfindungsgemäßen Verfahren wird mindestens eine Steckeinrichtungskomponente entsprechend befestigt.

Hierdurch ist ein schneller Anschluss des Hybridmoduls nach dem Montieren in das Getriebegehäuse möglich. Zudem werden hierdurch herumhängende Kabel oder Stecker vermieden, welche beim Transport beschädigt werden könnten.

Eine Steckereinrichtungskomponente ist z.B. ein Stecker oder eine Buchse. Z.B. ist auf einer Montageplatte, die sich an den oder die Stege anschließt, eine Buchse für Rotorlagesensorik befestigt und eine oder mehrere Buchsen sind in das Gehäuse des Aktorelektronikmoduls integriert. Besonders bevorzugt sind die Steckereinrichtungs-komponenten zumindest teilweise übereinander angeordnet, wodurch radialer Bauraum eingespart werden kann. Bevorzugt sind sie dabei derart angeordnet, dass sie eine gemeinsame Steckrichtung aufweisen. Alternativ sind die Steckereinrichtungs-komponenten an zwei verschiedenen Seiten der Halterung angeordnet, so dass sie entgegengesetzte Steckrichtungen aufweisen - hierdurch ist ebenfalls eine radial niedrige Bauform gegeben.

Die Erfindung wird nun beispielhaft durch Figuren veranschaulicht. Hierbei zeigen:

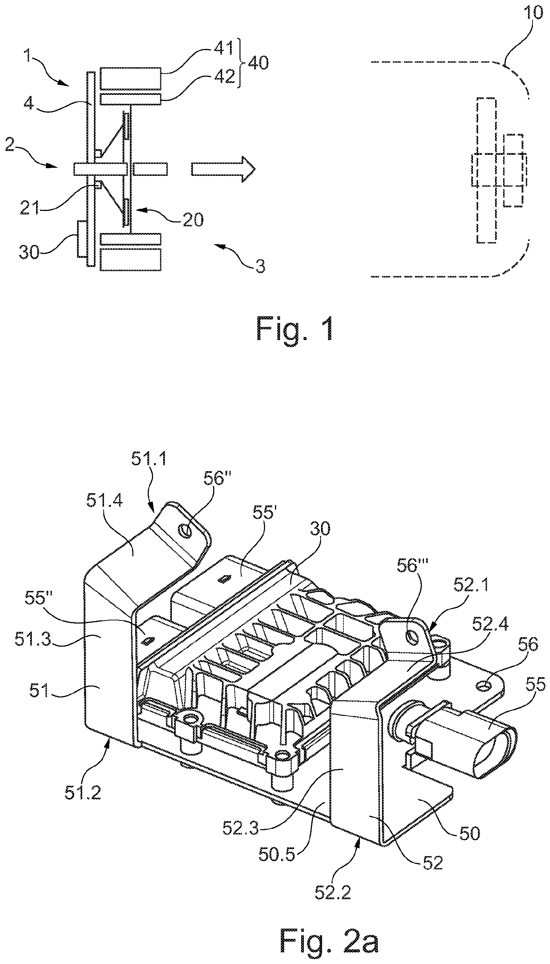

**Fig. 1** ein erfindungsgemäßes Hybridmodul,

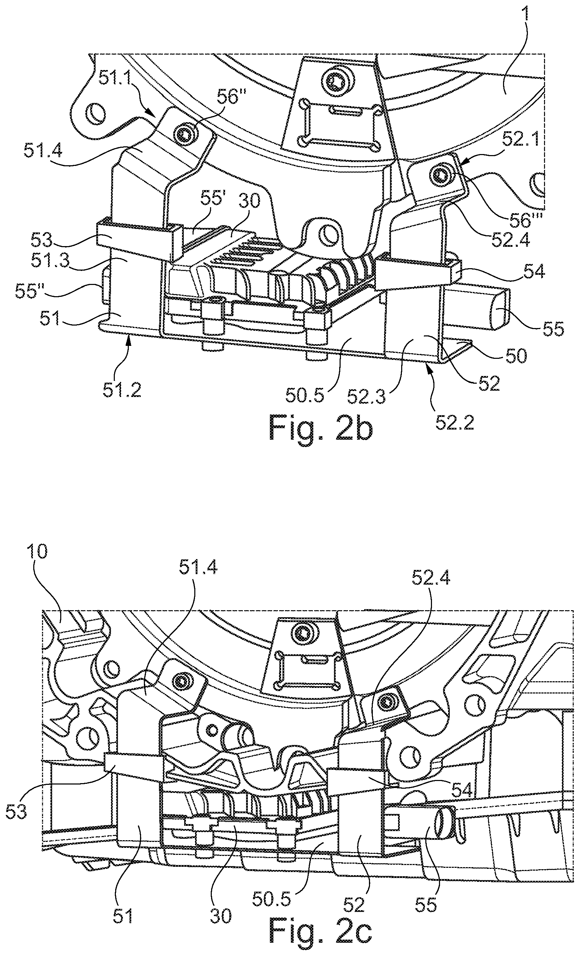

**Fig. 2a-2c** eine Halterung für ein erfindungsgemäßes Hybridmodul, wie z.B. das aus Fig. 1, wobei Fig. 2a die Halterung in unmontiertem Zustand zeigt, Fig. 2b die Halterung im mit dem Hybridmodul vormontierten Zustand zeigt und Fig. 2c die Halterung im in das Getriebegehäuse montierten Zustand zeigt,

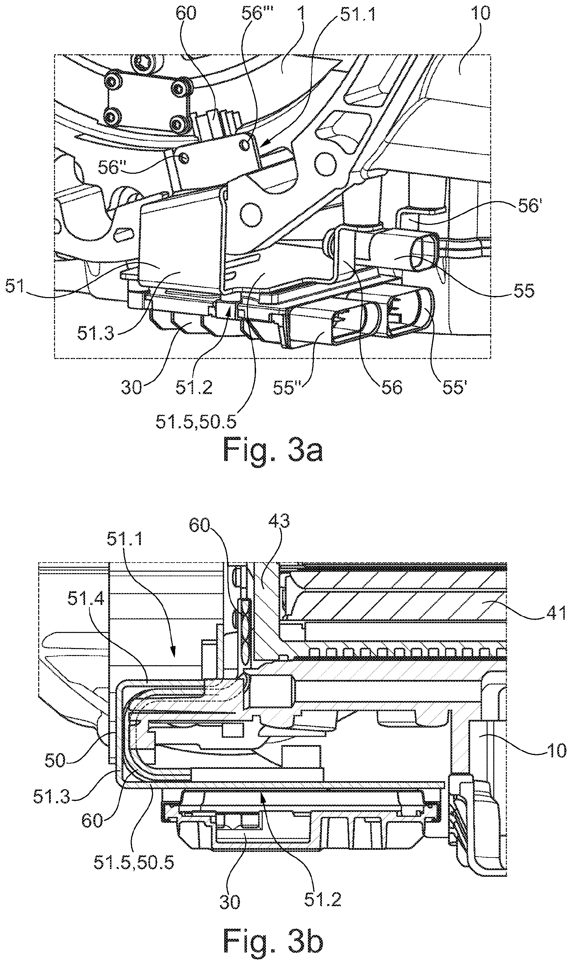

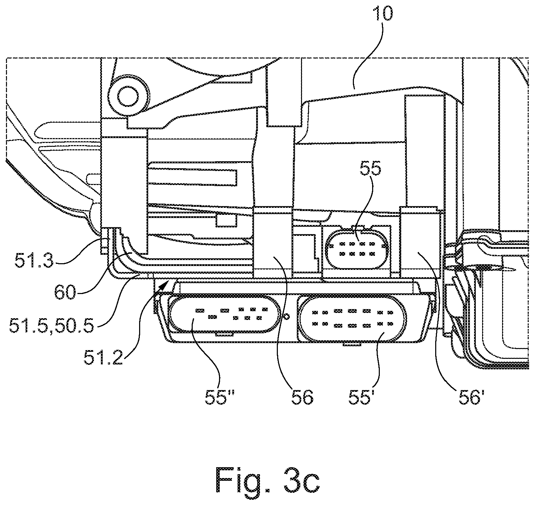

**Fig. 3a-3c** eine Halterung im in das Getriebegehäuse montierten Zustand ähnlich wie die aus Fig. 2a-2c, mit jedoch nur einem Steg, wobei Fig. 3a eine perspektivische Ansicht der Halterung schräg von der Verbrennungsmotorseite aus zeigt, Fig. 3b eine Seitenansicht der in Fig. 3a linken Seite der Halterung zeigt und Fig. 3c eine Ansicht der in Fig. 3a rechten Seite der Halterung zeigt.

**Fig. 1** zeigt ein erfindungsgemäßes Hybridmodul 1. Es weist eine Kupplung 20 mit Kupplungsaktor 21, eine elektrischen Maschine 40, eine Verbrennungsmotorseite 2 und eine Getriebeseite 3 auf. Es ist als vormontiertes Einschubmodul zum Einschub in ein Getriebegehäuse 10 ausgebildet und ein Aktorelektronikmodul 30 ist bereits an das Hybridmodul 1 vormontiert. Die elektrische Maschine 40 besteht hier aus einem Rotor 42, in den die Kupplung 20 integriert ist, und einem Stator 41.

Zur Montage des Hybridmoduls 1 wird dieses als Einschubmodul vormontiert, wobei das Aktorelektronikmodul 30 an das Hybridmodul 1 bereits vormontiert wird.

Hierdurch ist die eingangs erwähnte Erleichterung bei der Endmontage und die erhöhte Sicherheit beim Transport gewährleistet.

In diesem Beispiel ist zudem eine unmittelbare Befestigung des Aktorelektronikmoduls 30 an das Hybridmodul gezeigt. Es ist an eine verbrennungsmotorseitige, radial verlaufende Wandung 4 befestigt, die sich verbrennungsmotorseitig axial neben der elektrischen Maschine 40 befindet.

**Fig. 2a-2c** zeigen eine Halterung 50 für ein erfindungsgemäßes Hybridmodul 1, wie z.B. das aus Fig. 1, wobei Fig. 2a die Halterung 50 in unmontiertem Zustand zeigt, Fig. 2b die Halterung 50 im mit dem Hybridmodul 1 vormontierten Zustand zeigt und Fig. 2c die Halterung 50 im in das Getriebegehäuse 10 montierten Zustand zeigt. Das Aktorelektronikmodul 30 ist mittels der Halterung 50, die zwei Stege 51, 52 mit je einem radial verlaufenden Bereich 51.3, 52.3 aufweist, am Hybridmodul 1 befestigt. Die Stege 51, 52 sind in ihren einen Endbereichen 51.1, 52.1 mit dem Hybridmodul 1 befestigt und in ihren anderen Endbereichen 51.2, 52.2 mit dem Aktorelektronikmodul 30 über eine Montageplatte verbunden. Diese weist eine Bohrung als Befestigungsmöglichkeit 56 zur Befestigung an das Getriebegehäuse 10 auf. Die Stege 51, 52 weisen jeweils an dem einen Endbereich 51.1, 52.1 einen axial verlaufenden Bereich 51.4, 52.4 auf, welcher in den jeweiligen radial verlaufenden Bereich 51.3, 52.3 übergeht. Die Halterung 50 weist radial außerhalb des Außenumfangs des Hybridmoduls 1 einen axial verlaufenden Bereich 50.5 auf, in welchen der jeweilige radial verlaufende Bereich 51.3, 52.3 übergeht und welcher durch die Montageplatte gebildet ist. Die Stege 51, 52 weisen je ein Grommet 53, 54 auf, das im radial verlaufenden Bereich 51.3, 52.3 der Stege 51, 52 angeordnet ist. Auf der Montageplatte sind Buchsen 55, 55' 55" als Steckeinrichtungskomponenten befestigt.

Die Halterung 50 ist mit den zwei Stegen 51, 52 mit dem innenliegenden Hybridmodul 1 verschraubt und aus Blech. Über die beiden Stege 51, 52 werden bevorzugt Kabel nach außen geführt. An der Montageplatte, welche sich im endmontierten Zustand außerhalb der Getriebeglocke befindet, und einen axial verlaufenden Bereich 50.5 der Halterung 50 bildet, werden sowohl das Aktorelektronikmodul30 als auch der Sensorikstecker 55 für die elektrische Maschine 40 befestigt. Beide Komponenten liegen in einem für die Endmontage zugänglichen Bereich.

**Fig. 2b** zeigt die Lage derHalterung50 am Hybridmodul 1. Sie ist über die beiden Stege 51, 52 mit dem feststehenden Teil des Hybridmoduls 1 verschraubt. Die Positionierung des Blechs auf dem Hybridmodul 1 ist bevorzugt durch Stifte ausgeführt. Bevorzugt sind die Kabel des Kupplungsaktors 21 und der Sensorik der elektrischen Maschine 40 (z.B. für Temperatursensor - NTC und/oder einen Resolver) an einem oder beiden der Stege51, 52 zum Aktorelektronikmodul 30 geführt.

Beide Stege 51, 52 werden von einem Grommet 53, 54 umhüllt. Das jeweilige Grommet 53, 54 hat dabei sowohl eine Dichtungsfunktion, um den Innenraum des Hybridmoduls 1 vor Schmutz zu schützen. Andererseits werden bevorzugt alle Kabel durch Bohrungen in einem oder beiden Grommets 53, 54 geführt und so gegen mechanische Einflüsse (aufscheuern) geschützt. Die Grommets können mittels Hinterschnitte oder Warzen an das Blech befestigt werden.

Das Hybridmodul 1 wird wie in Fig. 2b gezeigt ausgeliefert. Somit sind sowohl das Aktorelektronikmodul 30 als auch der Sensorikstecker 55 bereits in ihrer Endlage befestigt und sämtliche Kabel zum Hybridmodul 1 hin verlegt.

**Fig. 2c** zeigt den in das Getriebegehäuse 10 eingeschobenen Zustand des Hybridmoduls 1. Bei der Endmontage brauchen seitens des Endmonteurs nach Einschub des Hybridmoduls 1 in das Getriebegehäuse lediglich die fahrzeugseitigen Stecker vom Kabelbaum an das Aktorelektronikmodul 30 sowie an den Sensorikstecker 55gesteckt werden.

Zur endgültigen Fixierung wird nach Einschub des Hybridmoduls 1 in das Getriebegehäuse 10 die Halterung 50mit zwei Schrauben an der Außenseite des Getriebegehäuses 10 befestigt.

Die Halterung 50 schützt das Aktorelektronikmodul30 und den Stecker 55 außerdem vor Umwelteinflüssen wie Spritzwasser und Schmutz.

**Fig. 3a-3c** zeigen eine Halterung 50 im in das Getriebegehäuse 10 montierten Zustand ähnlich wie die aus Fig. 2a-2c, mit jedoch nur einem Steg 51, wobei Fig. 3a eine perspektivische Ansicht der Halterung 50 schräg von der Verbrennungsmotorseite 2 aus zeigt, Fig. 3b eine Seitenansicht der in Fig. 3a linken Seite der Halterung 50 zeigt und Fig. 3c eine Ansicht der in Fig. 3a rechten Seite der Halterung 50 zeigt.

In dieser Variante ist die Halterung 50 mit einem einzigen Steg 51 aus dem Getriebegehäuse 10 geführt. Dabei werden alle Kabel 60 unter dem Steg 51 verlegt und sind durch diesem vor dem drehenden Schwingungsdämpfer, welcher unmittelbar an diese Position angrenzend verbaut wird, geschützt. Die aus Blech gefertigte Halterung 50 ist dabei durch zwei Schrauben am Kühlkanal 43 der elektrischen Maschine 40 verschraubt, wobei die Halterung hierfür als Befestigungsmöglichkeiten 56", 56''' entsprechende Bohrungen im hybridmodulseitigen Endbereich 51.1 aufweist, der zudem eine Abwinkelung aufweist.

An der Außenseite des Getriebegehäuses 10sind das Aktorelektronikmodul 30 und der Sensorikstecker 55 übereinander angebracht, so dass die Steckbuchsen 55' und 55' des Aktorelektronikmoduls 30 und der Sensorikstecker 44 übereinander liegen. Dadurch verringert sich der Platzbedarf und die fahrzeugseitigen Gegenstecker können von derselben Seite gesteckt werden. Der axial verlaufende Bereich 50.5 der Halterung, der auch als verbreiterter axial verlaufender Bereich 51.5 des Stegs 51 angesehen werden kann, weist Befestigungsmöglichkeiten 56, 56' zur Montage an das Getriebegehäuse 10 auf, welche jeweils durch ein doppelt abgewinkeltes Blechstück mit Bohrung gebildet sind.

Durch das in den Figuren 1 bis 3c gezeigte hybridmodulfeste Aktorelektronikmodul 30 können alle Niedervolt- und Sensorikanschlüsse bei der Vormontage eines "Einschubmoduls" verlegt werden. Dadurch ergeben sich Vorteile bei der Zuordnung, beim Transport sowie der späteren Endmontage beim Endmonteur.

Die vorliegende Erfindung sieht vor, dass ein Aktorelektronikmodul, bevorzugt über wenigstens einen Steg, mit dem Hybridmodul verbunden ist. Der Steg ist dabei geeignet ausgeführt, so dass Kabel hieran entlang sicher geführt werden können. Der Steg kann mit einer Bodenplatte bzw. Montageplatte verbunden sein oder in eine solche übergehen, auf der die Elektronik befestigt ist. Eine zweiteilge Ausbildung des Aktorelektronikmoduls und Boden/Steg Kombination (Terminal) ist bevorzugt. Die Dimensionierung des wenigstens einen Stegs (z.B. zwei Stege) ist so gewählt, dass die Bodenplatte mit installiertem Aktorelektronikmodul einen, bevorzugt radialen, Abstand zum Hybridmodul aufweisen, so dass dieses in eine Glocke des Getriebegehäuses hineingeschoben werden kann und die Leistungselektronik außerhalb des Getriebegehäuse, bevorzugt mit einem Gehäuseteil zwischen dem Aktorelektronikmodul und dem Hybridmodul bereitgestellt ist. Das Aktorelektronikmodul bzw. die Bodenplatte ist bevorzugt mit dem Getriebegehäuse verbunden.

### Bezugszeichenliste

- 1: Hybridmodul
- 2: Verbrennungsmotorseite
- 3: Getriebeseite
- 4: radial verlaufende Wandung
- 10: Getriebegehäuse
- 20: Kupplung
- 21: Kupplungsaktor
- 30: Aktorelektronikmodul
- 40: Elektrische Maschine
- 41: Stator
- 42: Rotor
- 43: Kühlkanal
- 50: Halterung
- 50.5: axial verlaufender Bereich der Halterung
- 51: Steg
- 51.1: Endbereich des Stegs
- 51.2: Endbereich des Stegs
- 51.3: radial verlaufender Bereich des Stegs
- 51.4: axial verlaufender Bereich des Stegs
- 51.5: axial verlaufender Bereich des Stegs
- 52: Steg
- 52.1: Endbereich des Stegs
- 52.2: Endbereich des Stegs
- 52.3: radial verlaufender Bereich des Stegs
- 52.4: axial verlaufender Bereich des Stegs
- 53: Grommet des Stegs 51
- 54: Grommet des Stegs 52
- 55: Steckeinrichtungskomponente
- 56: Befestigungsmöglichkeit
- 60: Kabel

## Patentansprüche

1. Hybridmodul (1)mit einer Kupplung (20) mit Kupplungsaktor(21) und einer elektrischen Maschine (40), einer Verbrennungsmotorseite (2) und einer Getriebeseite (3), wobeidas Hybridmodul (1) als vormontiertes Einschubmodul zum Einschub in ein Getriebegehäuse (10) ausgebildet ist und ein Aktorelektronikmodul (30) bereits an das Hybridmodul (1) vormontiert ist, **dadurch gekennzeichnet, dass** das Aktorelektronikmodul (30) mittels einer Halterung (50) an dem Hybridmodul (1) vormontiert ist, so dass es radial vom Hybridmodul (1) mit einem Abstand beabstandet ist, der so dimensioniert ist, dass im eingebauten Zustand das Hybridmodul (1) innerhalb und das Aktorelektronikmodul (30) außerhalb des Getriebegehäuses (10) angeordnet ist..

2. Hybridmodul (1) gemäß Anspruch 1, wobei das Aktorelektronikmodul (30) an eine verbrennungsmotorseitige, radial verlaufende Wandung (4)befestigt ist.

3. Hybridmodul (1) gemäß einem der vorhergehenden Ansprüche, wobei das Aktorelektronikmodul (30) mittels einer Halterung (50), die mindestens einen Steg (51, 52) mit einem radial verlaufenden Bereich (51.3, 52.3) aufweist, am Hybridmodul (1) befestigt ist, wobei der Steg (51, 52) an seinem einen Endbereich (51.1, 52.1) mit dem Hybridmodul (1) befestigt ist und mit seinem anderen Endbereich (51.2, 52.2) mit dem Aktorelektronikmodul (30) verbunden ist.

4. Hybridmodul (1) gemäß Anspruch 3, wobei der andere Endbereich (51.2, 52.2) oder ein an diesen anschließender Bereich der Halterung (50) oder das Aktorelektronikmodul (30) eine Befestigungsmöglichkeit (56, 56')zur Befestigung an das Getriebegehäuse (10) aufweist.

5. Hybridmodul (1) gemäß einem der Ansprüche 3 bis 4, wobei der Steg (51, 52) an dem einen Endbereich (51.1, 52.1) einen axial verlaufenden Bereich (51.4, 52.4) aufweist, welcher in den radial verlaufenden Bereich (51.3, 52.3) übergeht.

6. Hybridmodul (1) gemäß einem der Ansprüche 3 bis 5, wobei die Halterung (50) radial außerhalb des Außenumfangs des Hybridmoduls (1) einen axial verlaufenden Bereich (50.5, 51.5) aufweist, in welchen der radial verlaufenden Bereich (51.3, 52.3) übergeht.

7. Hybridmodul (1) gemäß einem der Ansprüche 3 bis 6, wobei der Steg (51, 52) ein Grommet (53, 54) aufweist.

8. Hybridmodul (1) gemäß einem der Ansprüche 3 bis 7, wobei mindestens ein Kabel (60) entlang des Stegs (51, 52) von dem Hybridmodul (1) zu dem Aktorelektronikmodul (30) verlegt ist.

9. Hybridmodul (1) gemäß einem der Ansprüche 3 bis 8, wobei mindestens eine Steckeinrichtungskomponente (55, 55', 55")an dem anderen Endbereich (51.2, 52.2) oder an einem an diesen anschließenden Bereich der Halterung (50) oder an das Aktorelektronikmodul (30) befestigt ist.

10. Verfahren zur Montage eines Hybridmoduls (1), **dadurch gekennzeichnet, dass** folgende Schritte durchgeführt werden:
- Vormontieren des Hybridmoduls (1) als Einschubmodul, wobei ein Aktorelektronikmodul (30) an das Hybridmodul (1) vormontiert wird,
- Einschieben des Hybridmoduls (1) in ein Getriebegehäuse, wobei das Hybridmodul (1), das Getriebegehäuse (10) und das Aktorelektronikmodul (30) sich wenigstens bereichsweise axial und/oder radial überlappen und wenigstens Bereiche des Getriebegehäuses (10) radial zwischen Hybridmodul (1) und Aktorelektronikmodul (30) liegen.

11. Verfahren gemäß Anspruch 10, wobei vor oder nach dem Vormontieren eine Kalibrierung und/oder ein Funktionstest des Aktorelektronikmoduls (30) zusammen mit dem Hybridmodul (1) durchgeführt wird.

12. Antriebsstrang umfassend ein Hybridmodul (1) nach einem der Ansprüche 1 bis 9 und ein Getriebegehäuse (10), **dadurch gekennzeichnet, dass** das Hybridmodul (1) in einem trockenen Gehäuseteil des Getriebegehäuses (10) angeordnet ist, wenigstens ein Teil des Getriebegehäuses (10) das Hybridmodul (1) wenigstens großteils axial übergreift und ein mit dem Hybridmodul (1) verbundenes Aktorelektronikmodul (30) radial von dem Hybridmodul (1) beabstandet ist, so dass weningstens ein Bereich des Getriebegehäuses (10) zwischen dem Aktorelektronikmodul (30) und dem Hybridmodul (1) liegt.

## Claims

1. Hybrid module (1) having a clutch (20) with a clutch actuator (21) and an electric machine (40), an internal combustion engine side (2) and a transmission side (3), the hybrid module (1) being configured as a pre-assembled push-in module for pushing into a transmission housing (10), and an actuator electronics module (30) having already been pre-assembled on the hybrid module (1), **characterized in that** the actuator electronics module (30) is pre-assembled on the hybrid module (1) by means of a holding device (50), with the result that it is spaced apart radially from the hybrid module (1) at a spacing which is dimensioned in such a way that, in the installed state, the hybrid module (1) is arranged inside the transmission housing (10) and the actuator electronics module (30) is arranged outside the transmission housing (10).

2. Hybrid module (1) according to Claim 1, the actuator electronics module (30) being fastened to a radially running wall (4) on the internal combustion engine side.

3. Hybrid module (1) according to either of the preceding claims, the actuator electronics module (30) being fastened to the hybrid module (1) by means of a holding device (50) which has at least one web (51, 52) with a radially running region (51.3, 52.3), the web (51, 52) being fastened at its one end region (51.1, 52.1) to the hybrid module (1) and being connected by way of its other end region (51.2, 52.2) to the actuator electronics module (30).

4. Hybrid module (1) according to Claim 3, the other end region (51.2, 52.2) or a region of the holding device (50) which adjoins it, or the actuator electronics module (30) having a fastening option (56, 56') for fastening to the transmission housing (10).

5. Hybrid module (1) according to either of Claims 3 and 4, the web (51, 52) having an axially running region (51.4, 52.4) at the one end region (51.1, 52.1), which axially running region (51.4, 52.4) merges into the radially running region (51.3, 52.3).

6. Hybrid module (1) according to one of Claims 3 to 5, the holding device (50) having an axially running region (50.5, 51.5) radially outside the outer circumference of the hybrid module (1), into which axially running region (50.5, 51.5) the radially running region (51.3, 52.3) merges.

7. Hybrid module (1) according to one of Claims 3 to 6, the web (51, 52) having a grommet (53, 54).

8. Hybrid module (1) according to one of Claims 3 to 7, at least one cable (60) being laid along the web (51, 52) from the hybrid module (1) to the actuator electronics module (30).

9. Hybrid module (1) according to one of Claims 3 to 8, at least one plug-in device component (55, 55', 55") being fastened to the other end region (51.2, 52.2) or to a region of the holding device (50) which adjoins it, or to the actuator electronics module (30).

10. Method for assembling a hybrid module (1), **characterized in that** the following steps are carried out:
- pre-assembling of the hybrid module (1) as a push-in module, an actuator electronics module (30) being pre-assembled on the hybrid module (1),
- pushing of the hybrid module (1) into a transmission housing, the hybrid module (1), the transmission housing (10) and the actuator electronics module (30) overlapping axially and/or radially at least in regions, and at least regions of the transmission housing (10) lying radially between the hybrid module (1) and the actuator electronics module (30) .

11. Method according to Claim 10, a calibration and/or a function test of the actuator electronics module (30) together with the hybrid module (1) being carried out before or after the pre-assembly.

12. Drive train comprising a hybrid module (1) according to one of Claims 1 to 9 and a transmission housing (10), **characterized in that** the hybrid module (1) is arranged in a dry housing part of the transmission housing (10), at least one part of the transmission housing (10) engages axially over the hybrid module (1) at least for the most part, and an actuator electronics module (30) which is connected to the hybrid module (1) is spaced apart radially from the hybrid module (1), with the result that at least one region of the transmission housing (10) lies between the actuator electronics module (30) and the hybrid module (1).

## Revendications

1. Module hybride (1) comprenant un embrayage (20) avec un actionneur d'embrayage (21) et une machine électrique (40), un côté moteur à combustion (2) et un côté transmission (3), le module hybride (1) étant réalisé sous forme de module insérable prémonté pour l'insertion dans un boîtier de transmission (10) et un module électronique d'actionneur (30) étant déjà prémonté sur le module hybride (1), **caractérisé en ce que** le module électronique d'actionneur (30) est prémonté au moyen d'une fixation (50) sur le module hybride (1) de telle sorte qu'il soit espacé radialement du module hybride (1) d'une distance dimensionnée de telle sorte que dans l'état inséré, le module hybride (1) soit disposé à l'intérieur et que le module électronique d'actionneur (30) soit disposé à l'extérieur du boîtier de transmission (10).

2. Module hybride (1) selon la revendication 1, dans lequel le module électronique d'actionneur (30) est fixé à une paroi (4) s'étendant radialement, du côté du moteur à combustion.

3. Module hybride (1) selon l'une quelconque des revendications précédentes, dans lequel le module électronique d'actionneur (30) est fixé au module hybride (1) au moyen d'une fixation (50) qui présente au moins une nervure (51, 52) avec une région s'étendant radialement (51.3, 52.3), la nervure (51, 52) étant fixée au module hybride (1) au niveau de l'une de ses régions d'extrémité (51.1, 52.1) et étant connectée au module électronique d'actionneur (30) par son autre région d'extrémité (51.2, 52.2).

4. Module hybride (1) selon la revendication 3, dans lequel l'autre région d'extrémité (51.2, 52.2) ou une région de la fixation (50) s'y raccordant, ou le module électronique d'actionneur (30), présente une possibilité de fixation (56, 56') pour la fixation au boîtier de transmission (10).

5. Module hybride (1) selon l'une quelconque des revendications 3 à 4, dans lequel la nervure (51, 52) présente au niveau de l'une de ses régions d'extrémité (51.1, 52.1) une région s'étendant axialement (51.4, 52.4) qui se prolonge par la région s'étendant radialement (51.3, 52.3).

6. Module hybride (1) selon l'une quelconque des revendications 3 à 5, dans lequel la fixation (50) présente, radialement à l'extérieur de la périphérie extérieure du module hybride (1), une région s'étendant axialement (50.5, 51.5) dans laquelle se prolonge la région s'étendant radialement (51.3, 52.3).

7. Module hybride (1) selon l'une quelconque des revendications 3 à 6, dans lequel la nervure (51, 52) présente un oeillet (53, 54).

8. Module hybride (1) selon l'une quelconque des revendications 3 à 7, dans lequel au moins un câble (60) est posé le long de la nervure (51, 52) depuis le module hybride (1) vers le module électronique d'actionneur (30).

9. Module hybride (1) selon l'une quelconque des revendications 3 à 8, dans lequel au moins un composant de dispositif d'enfichage (55, 55', 55") est fixé au niveau de l'autre région d'extrémité (51.2, 52.2) ou à une région de la fixation (50) s'y raccordant ou au module électronique d'actionneur (30).

10. Procédé de montage d'un module hybride (1), **caractérisé en ce que** les étapes suivantes sont réalisées :
- prémontage du module hybride (1) sous forme de module insérable, un module électronique d'actionneur (30) étant prémonté sur le module hybride (1),
- insertion du module hybride (1) dans un boîtier de transmission, le module hybride (1), le boîtier de transmission (10) et le module électronique d'actionneur (30) se chevauchant au moins en partie axialement et/ou radialement et au moins des régions du boîtier de transmission (10) étant situées radialement entre le module hybride (1) et le module électronique d'actionneur (30).

11. Procédé selon la revendication 10, dans lequel avant ou après le prémontage, on effectue un calibrage et/ou un test de fonctionnement du module électronique d'actionneur (30) conjointement avec le module hybride (1).

12. Chaîne cinématique comprenant un module hybride (1) selon l'une quelconque des revendications 1 à 9 et un boîtier de transmission (10), **caractérisée en ce que** le module hybride (1) est disposé dans une partie de boîtier sèche du boîtier de transmission (10), au moins une partie du boîtier de transmission (10) vient en prise axialement sur le module hybride (1) au moins sur la majeure partie de celui-ci et un module électronique d'actionneur (30) connecté au module hybride (1) est espacé radialement du module hybride (1), de telle sorte qu'au moins une région du boîtier de transmission (10) soit située entre le module électronique d'actionneur (30) et le module hybride (1).
